# EUROPÄISCHE PATENTSCHRIFT

(11) **EP 3 227 135 B1**
(45) Veröffentlichungstag und Bekanntmachung des Hinweises auf die Patenterteilung: **20.09.2023**
(21) Anmeldenummer: 15807836.0
(22) Anmeldetag: 03.12.2015
(51) Int. Cl.: B60K 11/08

(54) **OPTIMIERTES LUFTREGELSYSTEM FÜR FAHRZEUGE**
OPTIMIZED AIR CONTROL SYSTEM FOR VEHICLES
SYSTÈME DE RÉGULATION PNEUMATIQUE OPTIMISÉ POUR VÉHICULES

(30) Priorität: 03.12.2014 DE 102014117816
(43) Veröffentlichungstag der Anmeldung: 11.10.2017
(73) Patentinhaber: HBPO GmbH, 59552 Lippstadt (DE)
(72) Erfinder: SCHÖNING, Ralf, 33442 Herzebrock-Clarholz (DE)
(74) Vertreter: Bals, Rüdiger
(86) Internationale Anmeldenummer: PCT/EP2015/078480
(87) Internationale Veröffentlichungsnummer: WO 2016/087567

(56) Entgegenhaltungen:
- DE-A1-102011 078 691
- DE-A1-102011 078 691
- DE-A1-102014 108 575
- DE-A1-102014 108 575
- GB-A- 2 512 071
- JP-A- 2013 199 178
- JP-A- 2013 199 178
- KR-A- 20120 113 956
- US-A1- 2011 247 779
- US-A1- 2012 012 410
- US-A1- 2012 012 410
- US-A1- 2012 012 410
- US-A1- 2012 019 025
- US-A1- 2013 264 133
- US-A1- 2014 273 806

## Beschreibung

Die Erfindung betrifft eine Vorrichtung zum Regulieren einer Luftströmung zu einer Kühlervorrichtung eines Fahrzeuges.

Ferner bezieht sich die Erfindung auf ein Verfahren gemäß dem Anspruch 13.

Es ist aus dem Stand der Technik bekannt, dass in Fahrzeugen, insbesondere Kraftfahrzeugen, Frischluft durch Öffnungen des Fahrzeuges, wie z. B. einen Kühlergrill, eintritt und die Luftströmung zu einer Kühlervorrichtung des Fahrzeuges geleitet wird. Hierdurch kann gewährleistet werden, dass bspw. ein Motor des Fahrzeuges effizient und zuverlässig gekühlt wird und/oder der Fahrzeuginnenraum effizient klimatisiert werden kann. Dabei kann eine Vorrichtung zur Regulation der Luftströmung eingesetzt werden, um mittels Abdeckelementen die Öffnung des Fahrzeuges zumindest teilweise zu verschließen und damit den Lufteintritt zumindest teilweise zu verhindern. Dies bewirkt, dass bspw. ein Luftpolster vor dem Kühlergrill reduziert, die Kaltlaufphase des Motors verkürzt und die Betriebstemperatur des Motors schneller erreicht wird. Somit kann der CO₂-Ausstoß des Fahrzeuges reduziert und der cw-Wert (Strömungswiderstandkoeffizient des Fahrzeuges) optimiert werden. DE102014108575 beschreibt eine Kühlerjalousieanordnung mit einer Tragstruktur, an der Kühlerjalousien zwischen einer Öffnungsstellung und einer Schließstellung bewegbar angebracht sind, und mit einem Antrieb, der durch eine Übertragungseinrichtung mit den Kühlerjalousien koppelbar beziehungsweise gekoppelt ist. Um den Aufbau und/oder den Antrieb einer Kühlerjalousieanordnung mit einer Tragstruktur zu vereinfachen, umfasst die Übertragungseinrichtung einen Kopplungsrahmen mit einem Kopplungselement.

Nachteilhaft bei bekannten Lösungen für derartige Vorrichtungen zur Regulation der Luftströmung ist, dass diese konstruktionsbedingt oft einen erhöhten Platzbedarf insbesondere in Fahrzeuglängsrichtung aufweisen und daher nur mit deutlichem Abstand zur Öffnung (z. B. des Kühlergrills) im Fahrzeug angeordnet werden können. Aufgrund des Abstandes kann bei Lufteintritt ein Luftpolster entstehen, welches sich negativ auf den Luftwiderstand des Fahrzeuges auswirkt. Als weiterer Nachteil hat sich gezeigt, dass derartige Vorrichtungen oft konstruktionsbedingt eine Geometrie aufweisen, welche sich nicht der Geometrie des Fahrzeuges (bzw. des Bauraums des Fahrzeuges) anpassen lässt. Somit ist oft nur eine erschwerte Montage im Fahrzeug möglich. Eine Anpassung der Geometrie der Vorrichtung ist zudem nur mit erhöhtem Aufwand bei der Herstellung der Vorrichtung durchführbar.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine zuverlässige und effiziente Kühlung und Regulation der Luftströmung bei Fahrzeugen zu ermöglichen, wobei der Platzbedarf der Vorrichtung reduziert wird und eine Anpassung an die Geometrie des Fahrzeuges mit geringem Aufwand möglich ist.

Die voranstehende Aufgabe wird gelöst durch eine Vorrichtung mit den Merkmalen des Anspruchs 1 sowie einem Verfahren mit den Merkmalen des Anspruchs 13. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen Verfahren, und jeweils umgekehrt, sodass bezüglich der Offenbarung zu den einzelnen Erfindungsaspekten stets wechselseitig Bezug genommen wird bzw. werden kann.

Die erfindungsgemäße Vorrichtung, insbesondere Kühlluftregulationsvorrichtung, dient zum Regulieren einer Luftströmung zu einer Kühlervorrichtung eines Fahrzeuges, insbesondere Kraftfahrzeuges, wobei die Luftströmung durch zumindest eine Öffnung auf die Kühlervorrichtung leitbar ist, mit zumindest zwei Abdeckelementen zum zumindest teilweisen Verschließen der Öffnung in zumindest einer Schließstellung, und einem Antrieb, insbesondere einem Motor (bevorzugt einem (Elektro-)Drehmotor), zum Bewegen der Abdeckelemente zwischen der Schließstellung und einer Offenstellung zur zumindest teilweisen Freigabe der Öffnung, wobei ein, insbesondere ausschließlich ein einziger, Mitnehmer zur Übertragung einer Bewegung des (gemeinsamen) Antriebs an die Abdeckelemente vorgesehen ist, wobei die Abdeckelemente zueinander, insbesondere in axialer Richtung, angewinkelt angeordnet sind. Die axiale Richtung bezieht sich dabei auf die Längs- bzw. Kipp- bzw. Drehrichtung der Abdeckelemente und entspricht insbesondere im Wesentlichen der Normalen bzw. Senkrechten zur Fahrtrichtung. Die (insbesondere nebeneinander benachbarten) Abdeckelemente sind dabei insbesondere gegenüber der Normalen der Fahrtrichtung abgelenkt bzw. angewinkelt und/oder stets, d. h. sowohl in der Offen- als auch der Schließstellung (und dazwischen) mit einem konstanten Winkel α zueinander angewinkelt. Somit kann der Vorteil erzielt werden, dass die erfindungsgemäße Vorrichtung optimal der Geometrie des Fahrzeuges (insbesondere der Fahrzeugvorderseite und/oder eines Frontendmoduls des Fahrzeuges und/oder der Aerodynamik des Fahrzeuges) angepasst werden kann und somit weniger Bauraum benötigt wird. Hierdurch ist eine einfachere Montage der erfindungsgemäßen Vorrichtung möglich und es kann eine angepasste Abdichtung der Öffnung in der Schließstellung durch die (insbesondere nebeneinander benachbarten und/oder angewinkelten) Abdeckelemente erfolgen. Dieses erlaubt zudem eine verbesserte CO₂-Reduzierung und eine verbesserte Optimierung des cw-Wertes vom Fahrzeug.

Dabei dient die erfindungsgemäße Vorrichtung, insbesondere eine Kühlluftregulationsvorrichtung, insbesondere zur Kühlung eines Motors und/oder zur Klimatisierung des Fahrzeuges. Bei dem Fahrzeug kann es sich bspw. um ein Kraftfahrzeug, vorzugsweise um ein Personenkraftfahrzeug und/oder ein Lastkraftfahrzeug handeln. Zur Regulierung der Luftströmung sind zumindest zwei (seitlich nebeneinander angeordnete) Abdeckelemente, insbesondere erste und zweite Abdeckelemente vorgesehen, wobei bevorzugt erste Abdeckelemente auf einer ersten (z. B. linken) Seite im Fahrzeug und zweite Abdeckelemente auf einer gegenüberliegenden Seite (z. B. rechten Seite) im Fahrzeug angeordnet sind. Insbesondere weisen sämtliche erste Abdeckelemente dieselbe horizontale bzw. axiale Ausrichtung auf. Dasselbe gilt für die zweiten Abdeckelemente, welche bspw. dieselbe horizontale bzw. axiale Ausrichtung aufweisen. Die Richtungsangaben beziehen sich dabei stets auf die Fahrzeugrichtungen bei der montierten Vorrichtung. So ist z. B. die Vorderseite der erfindungsgemäßen Vorrichtung in Fahrtrichtung und die Rückseite zum Fahrzeuginneren hin ausgerichtet.

Es ist ferner denkbar, dass an jeder Seite der erfindungsgemäßen Vorrichtung jeweils ein, zwei, drei und/oder vier oder mehr Abdeckelemente vorgesehen sind, wobei die Abdeckelemente jeder Seite (d. h. jeweils erste und zweite Abdeckelemente) vorzugsweise parallel zueinander und/oder untereinander, angeordnet sind. Es sind bspw. eine Mehrzahl erster Abdeckelemente vorgesehen, die parallel angeordnet sind, und eine Mehrzahl zweiter Abdeckelemente, die parallel angeordnet sind, wobei sämtliche erste und zweite Abdeckelemente insbesondere in gleicher Weise und/oder gleichzeitig in die Offen- und Schließstellung, insbesondere durch den Mitnehmer, bewegt werden, um in der Schließstellung die Öffnung insbesondere vollständig zu verschließen. Die Öffnung ist bspw. eine Durchtrittsöffnung für Frischluft an der Vorderseite des Fahrzeuges, z. B. ein Kühlergrill, und kann vorzugsweise den Bereich vor der erfindungsgemäßen Vorrichtung und/oder mehrere Öffnungsbereiche an der erfindungsgemäßen Vorrichtung umfassen, durch welche Luft in der Offenstellung der Abdeckelemente durch die erfindungsgemäße Vorrichtung z. B. zwischen den Abdeckelementen geleitet werden kann. Dabei wird die Öffnung in der Offenstellung durch die Abdeckelemente zumindest teilweise (bis vollständig) freigegeben und in der Schließstellung die Öffnung durch die Abdeckelemente zumindest teilweise (bis vollständig) verschlossen und so der Lufteintritt zumindest teilweise verhindert.

Zur Bewegung bzw. Verstellung der Abdeckelemente zwischen der Schließstellung und der Offenstellung ist es erforderlich, dass sich die Abdeckelemente insbesondere gleichzeitig bewegen lassen. Hierzu ist ein Mitnehmer zur Übertragung der (Antriebs-)Bewegung, insbesondere einer Drehbewegung und/oder eines Drehmoments des (insbesondere einzigen) Antriebs vorgesehen, um die Bewegung von dem Antrieb insbesondere gleichmäßig und/oder in gleicher Weise an die Abdeckelemente, insbesondere an sämtliche Abdeckelemente der erfindungsgemäßen Vorrichtung, zu übertragen. Dabei erfolgt die Übertragung bevorzugt angewinkelt mit einem Winkelversatz, welcher der angewinkelten Anordnung der Abdeckelemente angepasst ist. Damit die Öffnung zuverlässig in der Schließstellung verschlossen ist, können die Abdeckelemente Abdeckmittel aufweisen, welche luftundurchlässig und/oder massiv z. B. als Klappen, Flügel, Lamellen und/oder als Rollo ausgebildet sind. Auch können die Abdeckmittel teilweise luftdurchlässig sein, um stets eine gewisse Zufuhr an Kühlluft zu gewährleisten. Die angewinkelte Übertragung der (Antriebs-)Bewegung erlaubt eine einfache und kostengünstige Herstellung der erfindungsgemäßen Vorrichtung, welche der angewinkelten Geometrie der Abdeckelemente bzw. des Fahrzeuges (d. h. insbesondere der Fahrzeugpfeilung) angepasst ist. Vorteilhafterweise kann im Rahmen der Erfindung vorgesehen sein, dass die Übertragung der Bewegung durch den Mitnehmer angewinkelt erfolgt, wobei insbesondere die Abdeckelemente über einen Winkel α angewinkelt zueinander angeordnet sind, wobei die Übertragung der Bewegung durch den Mitnehmer dem Winkel α zwischen den Abdeckelementen folgt. Es wird somit eine optimale und effiziente Übertragung der Bewegung durch den Mitnehmer erzielt. Der Mitnehmer kann dazu bspw. einen Grundkörper aufweisen, welcher z. B. im Wesentlichen parallel zum Kühlergrill bzw. zur Öffnung bzw. zu einem Mittelsteg angeordnet ist. Weiter kann der Mitnehmer zumindest ein Befestigungselement für jedes der zumindest zwei Abdeckelemente aufweisen, wobei das Befestigungselement angewinkelt zum Grundkörper, insbesondere mit dem Winkel β, am Mitnehmer angeordnet ist. Der Mitnehmer (d. h. der Grundkörper mit den Befestigungselementen) kann bevorzugt einstückig und/oder monolithisch (insbesondere aus einem Material) ausgebildet sein. Die Bewegung des Mitnehmers kann z. B. eine bogenförmige Bewegung in einem Kreisbogen sein, welche derart an die Abdeckelemente übertragen wird, dass eine Rotation, insbesondere Kippbewegung der Abdeckelemente erfolgt. Dabei ist insbesondere ein erstes Abdeckelement über den Winkel α angewinkelt zu dem zweiten Abdeckelement angeordnet. Bevorzugt sind sämtliche erste Abdeckelemente parallel zueinander und/oder untereinander angeordnet und sämtliche zweite Abdeckelemente parallel zueinander und/oder untereinander in der erfindungsgemäßen Vorrichtung angeordnet.

Ferner ist es denkbar, dass der Mitnehmer derart ausgebildet ist, dass die Bewegung, insbesondere eine Drehbewegung des Antriebs, durch den Mitnehmer mit einem Winkelversatz an die zumindest zwei Abdeckelemente übertragen wird. Die Bewegung kann insbesondere ein Drehmoment des Antriebs sein und insbesondere an den Abdeckelementen in eine kreisbogenförmige Bewegung umgewandelt werden. Es kann möglich sein, dass die Bewegung ausschließlich durch den Mitnehmer an die zumindest zwei Abdeckelemente übertragen wird. Somit ist der Mitnehmer mit zwei Verbindungselementen das Verbindungsstück zwischen dem Antrieb und den Abdeckelementen, sodass bei einer Entfernung des Mitnehmers eine Bewegung sämtlicher Abdeckelemente bei einer Bewegung des Antriebs verhindert ist. Dieses hat den Vorteil, dass auf eine komplizierte Übertragungsmechanik zwischen dem Antrieb und den einzelnen Abdeckelementen verzichtet werden kann. Vorzugsweise entspricht der Winkel zwischen den Abdeckelementen, d. h. den Längsachsen der Abdeckelemente, und der Normalen der Fahrtrichtung im Wesentlichen dem Winkelversatz des Befestigungselements des Mitnehmers, d. h. einem Winkel β. Somit entspricht der Winkelversatz bzw. der Winkel β bevorzugt im Wesentlichen der Hälfte des Winkels α.

Vorteilhafterweise kann im Rahmen der Erfindung vorgesehen sein, dass der Mitnehmer zumindest ein erstes Befestigungselement, insbesondere einen Befestigungszapfen, zur Verbindung mit den Abdeckelementen und insbesondere zumindest ein zweites Befestigungselement, insbesondere einen Befestigungszapfen, zur Verbindung mit dem Antrieb aufweist. Dabei dient das zweite Befestigungselement insbesondere zur indirekten Verbindung mit dem Antrieb. So kann bspw. die Verbindung des Mitnehmers mit dem Antrieb über ein Verbindungselement, z. B. eine Kurbel erfolgen (gemäß der beanspruchten Erfindung: zwei Verbindungselemente nämlich zwei Kurbeln). Das erste Befestigungselement und das zweite Befestigungselement sind insbesondere mit einem Winkelversatz (z. B. mit dem Winkel β) zueinander angeordnet, welcher dem Winkel α angepasst ist. Eine Verbindung des ersten Befestigungselements mit den Abdeckelementen und/oder des zweiten Befestigungselements mit dem Verbindungselement (gemäß der beanspruchten Erfindung : zwei Verbindungselemente) erfolgt vorzugsweise durch eine Clips- und/oder Rastverbindung und/oder über ein Gelenk- und/oder kraft- und/oder formschlüssig. Dies ermöglicht eine zuverlässige und sichere Übertragung der Bewegung an die Abdeckelemente.

Bevorzugt kann im Rahmen der Erfindung vorgesehen sein, dass der Mitnehmer als Gelenk, insbesondere als Kardangelenk oder Kreuzgelenk, ausgestaltet ist. Insbesondere kann es vorgesehen sein, dass jedes Abdeckelement jeweils mit einem Gelenk mit dem Mitnehmer verbunden ist. Das Abdeckelement kann z. B. als Rollo ausgebildet sein und eine Welle zum Aufwickeln des Rollos aufweisen, an die eine Drehbewegung des Antriebs durch den Mitnehmer übertragen wird. Die Übertragung der Bewegung erfolgt insbesondere ausschließlich über den Mitnehmer. Dabei kann der Beugewinkel des Kardangelenkes oder des Kreuzgelenkes dem Winkelversatz bzw. dem Winkel β entsprechen und dem Winkel zwischen einem ersten Abdeckelement und einem zweiten Abdeckelement angepasst sein.

Somit ist eine kostengünstige Ausgestaltung des Mitnehmers zur zuverlässigen Übertragung der Bewegung möglich.

Vorteilhafterweise kann im Rahmen der Erfindung vorgesehen sein, dass der Kraftfluss zur Übertragung der Bewegung zum Bewegen der Abdeckelemente zwischen der Schließstellung und der Offenstellung von dem Antrieb, insbesondere ausschließlich über den Mitnehmer an die Abdeckelemente erfolgt. Es wird hierdurch der Vorteil erzielt, dass der Kraftfluss zur Bewegung der Abdeckelemente zwischen der Schließstellung und der Offenstellung zuverlässig und effizient über einen Winkelversatz erfolgen kann, der der angewinkelten Anordnung der Abdeckelemente angepasst ist. Der Mitnehmer ist indirekt mit dem Antrieb über zwei Verbindungselemente verbunden, sodass bei einem Betrieb des Antriebs eine Rotationsbewegung des bzw. der Verbindungselemente erfolgt. Da die Verbindungselemente mit dem Mitnehmer form - und/oder kraftschlüssig verbunden sind, wird die Bewegung des Antriebs an den Mitnehmer übertragen und die Verbindungselemente führen somit den Mitnehmer in eine kreisbogenförmige Bewegung. Der Mitnehmer ist wiederum kraft- und/oder formschlüssig mit den Abdeckelementen insbesondere sämtlichen Abdeckelementen verbunden und führt daher die Abdeckelemente in einer Rotationsbewegung. Dabei erfolgt die Übertragung der Bewegung vorzugsweise ausschließlich vom Antrieb (über die zwei Verbindungselemente) auf den Mitnehmer, und somit nicht vom Abdeckelement auf den Mitnehmer bzw. vom Antrieb auf das Abdeckelement.

Bevorzugt kann im Rahmen der Erfindung vorgesehen sein, dass zumindest ein im Kraftfiuss liegendes Bauteil, insbesondere der Mitnehmer und/oder das erste und/oder zweite Befestigungselement des Mitnehmers, eine ballige und/oder bombierte und/oder abgewinkelte Oberfläche aufweist, die insbesondere derart ausgestaltet ist, dass Toleranzen bei einer Rotationsbewegung, insbesondere der Abdeckelemente, der Befestigungselemente und/oder des Mitnehmers ausgeglichen werden. Aufgrund der angewinkelten Anordnung der Abdeckelemente erfolgt die Bewegung insbesondere der Abdeckelemente ohne Ausgleich bspw. nicht in einer einzigen Ebene, wobei hier von einer Toleranz bei der Rotationsbewegung gesprochen wird. Hierbei wird der Vorteil erzielt, dass durch eine entsprechende Ausgestaltung des im Kraftfluss liegenden Bauteils ein Ausgleich dieser Toleranz erfolgen kann.

Vorteilhafterweise kann im Rahmen der Erfindung vorgesehen sein, dass die Abdeckelemente beweglich insbesondere drehbar in einem Träger gelagert sind, wobei insbesondere zumindest zwei Lagerelemente der Abdeckelemente in jeweils einer Lageraufnahme, insbesondere Drehlageraufnahme, des Trägers drehbar, d. h. insbesondere um deren Längsachse kippbar, gelagert sind. Somit können die Abdeckelemente zuverlässig zwischen einer Offenstellung und einer Schließstellung bewegt bzw. (um deren axiale Längs- bzw. Drehachse) gedreht werden. Dabei sind in der Schließstellung insbesondere in der Betriebsposition die Abdeckmittel der Abdeckelemente insbesondere parallel zur Öffnung angeordnet, sodass die Abdeckmittel die Öffnung zuverlässig insbesondere vollständig verschließen können. Ausgehend von der Schließstellung können die Abdeckelemente durch eine Drehbewegung, insbesondere eine Rotation um im Wesentlichen 90°, in eine (Offen-)Stellung gebracht werden, in welcher die Öffnung freigegeben und ein Lufteintritt durch Durchtrittsöffnungen zwischen den Abdeckmitteln möglich ist. Die Lagerelemente können zur drehbaren Lagerung der Abdeckelemente z. B. innen und/oder außen an jedem Abdeckelement angeordnet sein und insbesondere einstückig und/oder monolithisch mit den Abdeckmitteln ausgebildet sein. Die Lageraufnahmen sind entsprechend innen und/oder außen an dem Träger angeordnet.

Bevorzugt kann vorgesehen sein, dass zumindest ein mittiges Lagerelement der Abdeckelemente mittig an zumindest ein Abdeckmittel der Abdeckelemente angeordnet ist, und insbesondere als Aufnahmeelement für ein Stützelement des Trägers ausgebildet ist. Das zumindest eine Stützelement des Trägers ist dabei derart an den Abdeckelementen, insbesondere an der Rückseite der erfindungsgemäßen Vorrichtung angeordnet, dass bei einem Lufteintritt die Stützelemente dem Luft-Anpressdruck entgegenwirken und somit eine Verbiegung oder Verformung der Abdeckelemente, insbesondere der Abdeckmittel verhindern. Somit kann gewährleistet werden, dass auch bei einer hohen Fahrgeschwindigkeit und entsprechend hohen Anpressdrucken, verursacht durch eintretende Frischluft, eine Beschädigung der Abdeckelemente verhindert wird.

Es ist ferner denkbar, dass der Träger und/oder die Abdeckelemente und/oder der Mitnehmer einstückig, insbesondere monolithisch (aus einem Material), ausgebildet sind, insbesondere aus einem (Kunststoff-)Spritzgussteil und/oder glasfaserverstärkt. Hierdurch kann eine kostengünstige Herstellung der erfindungsgemäßen Vorrichtung ermöglicht werden. Auch ist es denkbar, dass der Träger und/oder die Abdeckelemente in einem 2K-Kunststoffspritzguss-Verfahren einstückig herstellbar ist. Ferner kann der Träger z. B. vollständig die Abdeckelemente im Seitenbereich und/oder im oberen und/oder im unteren Bereich der erfindungsgemäßen Vorrichtung umschließen und lagern. Ebenfalls kann der Träger einen Mittelsteg aufweisen, welcher Lageraufnahmen für die Abdeckelemente aufweist. Der Mittelsteg und/oder der Mitnehmer kann zudem zumindest eine Durchtrittsöffnung aufweisen, durch welche Frischluft zur Kühlung eines Antriebs eintreten kann. Dabei kann der Antrieb insbesondere unmittelbar hinter dem Mittelsteg des Trägers angeordnet sein. Es wird damit ein sicherer und zuverlässiger Betrieb des Antriebs gewährleistet und eine Überhitzung verhindert.

Vorteilhafterweise kann im Rahmen der Erfindung vorgesehen sein, dass zwei Verbindungselemente, nämlich zwei Kurbeln, zur direkten Verbindung und/oder Übertragung der Bewegung des Antriebs, insbesondere einer Antriebswelle und/oder Antriebsaufnahme, mit dem Mitnehmer, insbesondere mit einem zweiten Befestigungselement verbunden ist. Hierdurch wird eine Bewegung des Mitnehmers in eine teilweise Kreisbahn ermöglicht. Eine sichere Verbindung wird z. B. dadurch erzielt, dass jedes der zwei Verbindungselemente kraft- und/oder formschlüssig mit dem jeweils einem zweiten Befestigungselement z. B. durch eine Rast- und/oder Clipsverbindung verbunden ist. Das jeweilige Verbindungselement kann dabei ebenfalls im Träger bzw. in einem Mittelsteg des Trägers beweglich und/oder drehbar gelagert sein und für die Lagerung insbesondere einen Lagerfortsatz aufweisen. Der Träger, insbesondere der Mittelsteg, weist ggf. zumindest eine entsprechende Lageraufnahme für jeden Lagerfortsatz auf.

Vorteilhafterweise kann im Rahmen der Erfindung vorgesehen sein, dass der Mitnehmer über zumindest ein erstes Befestigungselement direkt mit den Abdeckelementen, insbesondere kraft- und/oder formschlüssig mit einem Aufnahmeelement der Abdeckelemente, verbunden ist, insbesondere derart, dass bei einer Bewegung des Mitnehmers eine Rotation der Abdeckelemente zwischen der Offenstellung und der Schließstellung erfolgt. Hierdurch wird eine zuverlässige und sichere Übertragung der Bewegung ermöglicht. Dabei kann es möglich sein, dass zumindest zwei Befestigungselemente, d. h. ein Befestigungselement für jedes Abdeckelement, vorgesehen sind. Die Verbindung zwischen den Befestigungselementen und den Abdeckelementen erfolgt insbesondere kraft- und/oder formschlüssig durch eine Rast- und/oder Clipsverbindung. Dabei sind die Befestigungselemente des Mitnehmers bevorzugt drehbar in den korrespondierenden Aufnahmeelementen der Abdeckelemente gelagert und führen die Abdeckelemente in einer Rotationsbewegung.

Der bisher beschriebene Antrieb kann zwei Antriebsaufnahmen (z. B. mit jeweils einem Vielzahn) aufweisen, die zur Weiterleitung der Antriebsbewegung direkt an den Mitnehmer oder indirekt an die zwei Verbindungselemente vorgesehen sind. Idealerweise sind die beiden Antriebsaufnahmen axial gegenüber am Antrieb angeordnet und können zur rotationsfesten Aufnahme der (beiden) Verbindungselemente dienen. Die beiden Verbindungselemente (insbesondere in Form einer Kurbel) sind wiederum jeweils mit dem Mitnehmer verbunden und übertragen die vom Antrieb eingeleitete Kraft/Bewegung auf den Mitnehmer,

Es ist ferner denkbar, dass zumindest ein Fixierelement des Mitnehmers derart am ersten Befestigungselement angeordnet ist, dass eine seitliche Bewegung der Abdeckelemente blockiert ist. Dabei dient das Fixierelement bevorzugt als Anschlag für das Aufnahmeelement des Abdeckelements, sodass eine axiale Bewegung (d. h. entlang der Längsachse der Abdeckelemente) der Abdeckelemente begrenzt wird und eine sichere Verbindung und Lagerung zwischen dem Mitnehmer und den Abdeckelementen ermöglicht wird. Es können dabei bevorzugt zumindest zwei Fixierelemente vorgesehen sein, d. h. eines für jedes Abdeckelement bzw. Aufnahmeelement der Abdeckelemente. Die Fixierelemente ermöglichen vorzugsweise eine axiale Führung bzw. Lagerung der Abdeckelemente. Die Führung der Abdeckelemente durch den Mitnehmer erfolgt derart, dass durch die Bewegung des Mitnehmers entlang einer teilweisen Kreisbahn eine Rotation der Abdeckelemente um z. B. zumindest 10°, 30°, 45°, 60°, 75° oder im Wesentlichen 90° erfolgt.

Ebenfalls Gegenstand der Erfindung ist ein Verfahren zum Betrieb einer Vorrichtung zum Regulieren einer Luftströmung zu einer Kühlervorrichtung eines Fahrzeuges, insbesondere Kraftfahrzeuges, wobei die Luftströmung durch zumindest eine Öffnung auf die Kühlervorrichtung geleitet wird, mit zumindest zwei Abdeckelementen, wobei die Abdeckelemente in zumindest einer Schließstellung die Öffnung zumindest teilweise verschließen, und in einer Offenstellung die Öffnung zumindest teilweise freigeben, wobei die Bewegung der Abdeckelemente zwischen der Schließstellung und der Offenstellung durch einen Antrieb erfolgt, wobei die Abdeckelemente, insbesondere zueinander, angewinkelt angeordnet sind und die Bewegung des Antriebs an die Abdeckelemente insbesondere über einen Mitnehmer übertragen werden. Weiter kann die erfindungsgemäße Vorrichtung mit dem erfindungsgemäßen Verfahren betrieben werden. Somit bringt das erfindungsgemäße Verfahren die gleichen Vorteile mit sich, wie sie ausführlich mit Bezug auf die erfindungsgemäße Vorrichtung erläutert worden sind.

Ferner handelt es sich im Rahmen der Erfindung bei der erfindungsgemäßen Vorrichtung insbesondere um eine Kühlluftregulationsvorrichtung für ein Fahrzeug, insbesondere Kraftfahrzeug und/oder Personenkraftfahrzeug und/oder Lastkraftfahrzeug. Dabei können die zumindest zwei Abdeckelemente insbesondere erste und zweite Abdeckelemente sein. Die Bewegung kann z. B. eine Drehbewegung und/oder ein Drehmoment des Antriebs aufweisen, welche bei einem Betrieb des Antriebs erzeugt wird. Dabei kann der Antrieb bevorzugt selbsthemmend ausgebildet sein und insbesondere ein Schneckengetriebe aufweisen, sodass eine Drehbewegung der Abdeckelemente insbesondere ausschließlich durch den Antrieb durchführbar ist. Es wird hierdurch der Vorteil erzielt, dass in der Schließstellung ein Luftanpressdruck auf die Abdeckelemente bzw. Abdeckmittel der Abdeckelemente nicht zu einer Drehbewegung der Abdeckelemente (in eine Offenstellung) führt, da die Bewegung durch den (nicht betriebenen) Antrieb blockiert wird. Die Bewegung der Abdeckelemente zwischen einer Offenstellung und einer Schließstellung ist insbesondere eine Drehbewegung, insbesondere in einem Winkelbereich zwischen 0° (d. h. das Abdeckmittel ist parallel zur Öffnung angeordnet) und z. B. 20°, 45°, 70° und/oder 90° (d. h. das Abdeckmittel ist derart gedreht, dass die Öffnung zumindest teilweise freigegeben ist und ein Lufteintritt möglich ist). In der Schließstellung befinden sich die Abdeckelemente bzw. Abdeckmittel insbesondere parallel zur Normalen der Fahrzeugrichtung. In der zumindest einen Offenstellung und/oder in der 90°-Stellung befinden sich die Abdeckelemente bzw. Abdeckmittel insbesondere im Wesentlichen parallel zur Fahrzeugunterseite. Die Rotation der Abdeckelemente zur Bewegung zwischen der Offenstellung und der Schließstellung erfolgt dabei bevorzugt um die Längsachse der Abdeckelemente bzw. Abdeckmittel. Durch einen Betrieb des Antriebs wird eine Drehbewegung z. B. einer Antriebswelle und/oder Antriebsaufnahme des Antriebs erzeugt, wobei z. B. in der Antriebsaufnahme eine Antriebswelle (über einen Vielzahn) zwei Verbindungselemente (rotationsfest) fluchtend (insbesondere auf einer Achse) angeordnet sind. Die Verbindungselemente sind dabei drehbar im Träger durch zumindest ein, insbesondere zwei Lagermittel gelagert und rotationsfest mit dem Antrieb bzw. der Antriebsaufnahme verbunden. Entsprechend verursacht der Betrieb des Antriebs eine Rotation der Verbindungselemente, wobei die Bewegung der Verbindungselemente an den Mitnehmer übertragen wird. Hierzu ist der Mitnehmer derart mit den Verbindungselementen verbunden, dass eine insbesondere kreisbogenförmige Bewegung des Mitnehmers verursacht wird. Der Mitnehmer ist insbesondere auf der von der Antriebswelle der Verbindungselemente (welche in der Antriebsaufnahme des Antriebs angeordnet sind) gegenüberliegenden Seite am Kurbelarm angeordnet. Die Bewegung des Mitnehmers wird ferner insbesondere an sämtliche Abdeckelemente übertragen, wobei die Abdeckelemente insbesondere über einen Winkelversatz mit dem Mitnehmer verbunden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1a: eine Vorderansicht einer erfindungsgemäßen Vorrichtung in einer Schließstellung,
- Figur 1b: eine weitere Vorderansicht einer erfindungsgemäßen Vorrichtung in einer Offenstellung,
- Figur 2a: eine Draufsicht auf eine erfindungsgemäße Vorrichtung,
- Figur 2b: eine schematische Draufsicht auf eine erfindungsgemäße Vorrichtung zur Veranschaulichung der Geometrie,
- Figur 3: eine perspektivische Rückansicht auf eine erfindungsgemäße Vorrichtung,
- Figur 4: eine weitere perspektivische Rückansicht auf die erfindungsgemäße Vorrichtung,
- Figur 5: eine perspektivische Vorderansicht von Teilen einer erfindungsgemäßen Vorrichtung,
- Figur 6: eine Draufsicht von Teilen einer erfindungsgemäßen Vorrichtung,
- Figur 7a: eine schematische Rückansicht auf eine erfindungsgemäße Vorrichtung in einer Offenstellung,
- Figur 7b: eine schematische Rückansicht auf die erfindungsgemäße Vorrichtung in einer Schließstellung und
- Figur 8: eine schematische Darstellung zur Visualisierung von Verfahrensschritten eines erfindungsgemäßen Verfahrens.

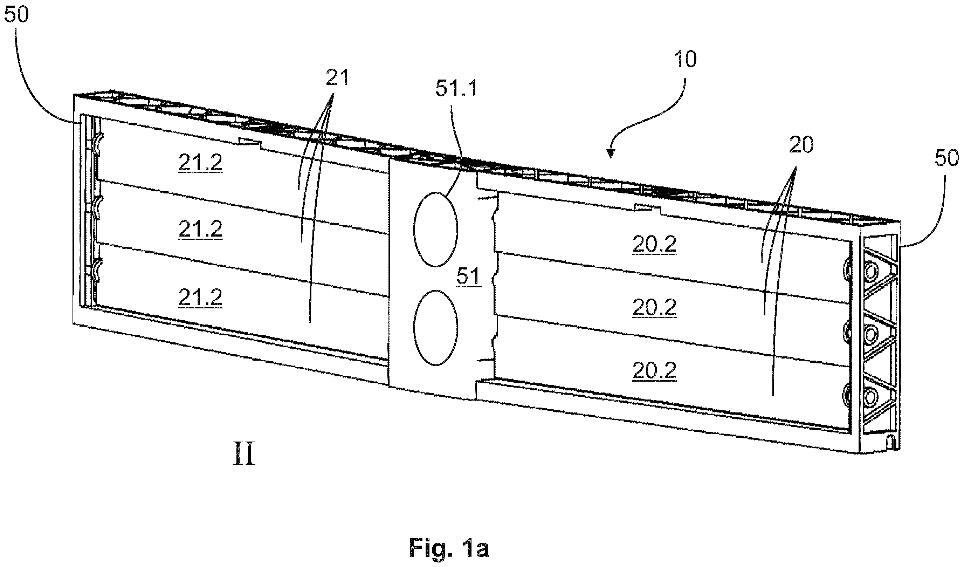

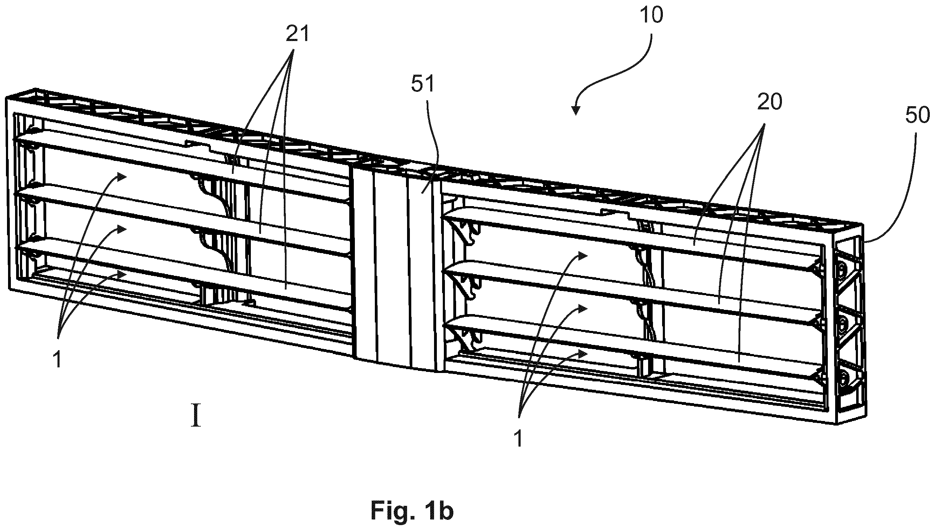

Die Figuren 1a und 1b zeigen eine Vorderansicht einer erfindungsgemäßen Vorrichtung 10, wobei in Figur 1a eine Schließstellung II dargestellt ist. Dabei ist erkennbar, dass in der Schließstellung II Abdeckelemente 20, 21 geschlossen sind und somit der Lufteintritt durch eine Öffnung 1 zumindest teilweise durch die Abdeckelemente 20, 21 verhindert wird. Die Öffnung 1 kann bspw. die in der Offenstellung I in Figur 1b dargestellten Zwischenräume der Vorrichtung 10 umfassen, sodass bei geöffneten Abdeckelementen 20, 21 die Luftströmung durch die Vorrichtung 10 geleitet werden kann. Ebenfalls ist es denkbar, dass ein Lufteintrittsbereich bzw. ein Kühlergrill des Fahrzeuges unmittelbar vor der erfindungsgemäßen Vorrichtung 10 als Öffnung 1 aufgefasst wird. Zudem kann es möglich sein, dass die Öffnung 1 unterschiedliche Öffnungsbereiche aufweist, wobei jedem Öffnungsbereich zumindest ein (und im gezeigten Ausführungsbeispiel jeweils drei) Abdeckelement/e 20, 21 zugeordnet ist. So sind in Figur 1a erste Abdeckelemente 20 (linksseitig in Fahrzeugrichtung) und zweite Abdeckelemente 21 (rechtsseitig in Fahrzeugrichtung) dargestellt, wobei jedes der Abdeckelemente 20, 21 Abdeckmittel 20.2, 21.2 aufweist. Die Abdeckmittel 20.2, 21.2 sind luftundurchlässig und z. B. starr, elastisch oder biegbar z. B. als Lamelle, Klappe oder Rollo ausgebildet, um ein luftundurchlässiges Verschließen der Öffnung 1 zu bewirken. Sämtliche Abdeckmittel 20.2, 21.2 bzw. entsprechende Abdeckelemente 20, 21 sind dabei parallel zueinander angeordnet. Die Abdeckelemente 20, 21 sind drehbar in einem Träger 50 gelagert. Somit können die Abdeckelemente 20, 21 von einer Schließstellung II, in welcher die Abdeckmittel 20.2, 21.2 die Öffnung 1 verschließen bzw. den Lufteintritt in das Fahrzeug verhindern, durch eine Drehbewegung im Träger 50 in eine Offenstellung I überführt werden, in welcher die Abdeckmittel 20.2, 21.2 derart angeordnet bzw. gedreht sind, dass der Lufteintritt durch die Öffnung 1 ermöglicht wird. Die Offenstellung I der erfindungsgemäßen Vorrichtung 10 ist in Figur 1b dargestellt. In Figur 1a ist ferner ein Mittelsteg 51 dargestellt, welcher z. B. ein integraler Teil des Trägers 50 sein kann, wobei hinter dem Mittelsteg 51 ein Antrieb 30 angeordnet ist. Zudem kann der Mittelsteg 51 zumindest eine Kühlöffnung 51.1 für den Antrieb 30 aufweisen, um so eine ausreichende Kühlung durch Frischluft, welche durch die Kühlöffnungen 51.1 auf den Antrieb 30 geleitet wird, zu bewirken und somit einen sicheren Betrieb des Antriebs 30 zu gewährleisten. Die Vorrichtung 10 ist dabei z. B. im vorderen Bereich des Fahrzeuges, z. B. im (hinteren) Bereich eines Frontendmoduls des Fahrzeuges angeordnet. Die Vorderseite der Vorrichtung 10 ist zu dem Fahrzeugäußeren bzw. zur Fahrzeugvorderseite hin ausgerichtet, sodass bei einem Lufteintritt durch die Vorrichtung 10 die Luft in das Fahrzeuginnere geführt wird. Die folgenden Richtungsangaben an der Vorrichtung 10 entsprechen dabei stets den Fahrzeugrichtungen (z. B. ist die Vorderseite der Vorrichtung 10 in Fahrtrichtung und die Rückseite zum Fahrzeuginneren hin ausgerichtet).

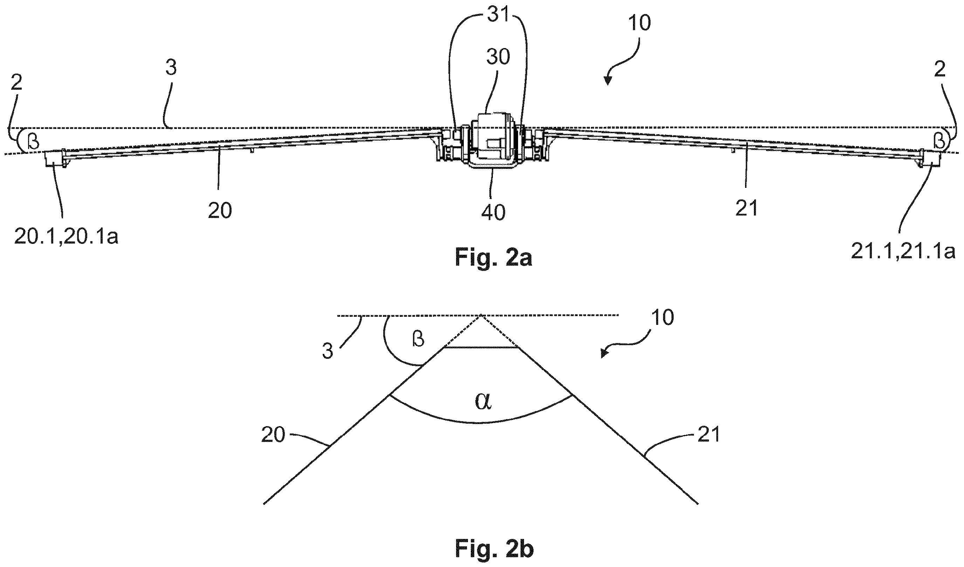

In Figur 2a und Figur 2b ist eine Draufsicht auf die erfindungsgemäße Vorrichtung 10 gezeigt, wobei erste Abdeckelemente 20 auf der linken Seite der Vorrichtung 10 bzw. des Fahrzeuges und zweite Abdeckelemente 21 auf der rechten Seite der Vorrichtung 10 bzw. des Fahrzeuges angeordnet sind. Die Abdeckelemente 20, 21 sind mittig über einen Mitnehmer 40 verbunden. Der Mitnehmer 40 ist dabei zugleich mit den Abdeckelementen 20, 21 und mit einem Antrieb 30 der Vorrichtung 10 (indirekt) verbunden und derart angeordnet, dass durch den Mitnehmer 40 eine Bewegung des Antriebs 30 (insbesondere einer Antriebswelle oder Antriebsaufnahme 30.1 des Antriebs 30) an die Abdeckelemente 20, 21 übertragbar ist. Die Antriebsaufnahme 30.1 des Antriebs 30 fluchtet dabei mit einer Antriebswelle 31.2 eines Verbindungselementes 31, und ist mit dem Verbindungselement 31 rotationsfest verbunden. Das Verbindungselement 31 ist als Kurbel ausgebildet und z. B. über eine Rast- bzw. Clipsverbindung form- und/oder kraftschlüssig mit einem zweiten, insbesondere inneren, Befestigungselement 40.2 des Mitnehmers 40 verbunden sein. Hierzu kann das zweite Befestigungselement 40.2 als Befestigungszapfen ausgestaltet sein und drehbar kraft- und/oder formschlüssig in dem Verbindungselement 31 gelagert sein. Ebenfalls ist in Figur 2a dargestellt, dass die Abdeckelemente 20, 21 angewinkelt zueinander angeordnet sind, d. h. insbesondere die ersten Abdeckelemente 20 sind angewinkelt zu den zweiten Abdeckelementen 21 angeordnet. Zur Ausrichtung des Antriebs 30 (d. h. der Antriebswellen bzw. Antriebsaufnahme 30.1 des Antriebs 30) und/oder zur Normalen zur Fahrtrichtung 3 weisen die Abdeckelemente 20, 21 (bzw. deren mit einer gestrichelten Linie dargestellte Drehachse) dabei einen Ablenkungswinkel β auf. Entsprechend sind die Abdeckelemente 20, 21 über einen Winkel α angewinkelt zueinander angeordnet, wobei der Winkel α dem Zweifachen des Winkels β entspricht. Daher ist es notwendig, dass die Übertragung der Bewegung des Antriebs 30 an die Abdeckelemente 20, 21 angewinkelt, d. h. mit einem Winkelversatz 2 erfolgt. Die angewinkelte Anordnung der Abdeckelemente 20, 21 ist in Figur 2b deutlich erkennbar.

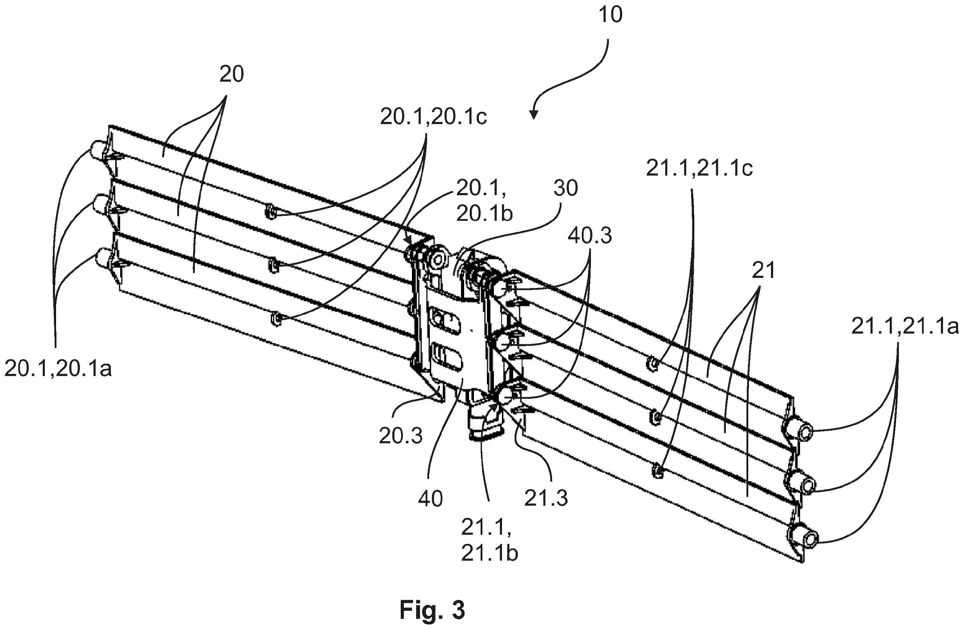

In Figur 3 ist eine perspektivische Rückansicht auf Teile einer erfindungsgemäßen Vorrichtung 10 gezeigt, wobei der Träger 50 nicht dargestellt ist. Die erfindungsgemäße Vorrichtung 10 umfasst dabei erste Abdeckelemente 20 und zweite Abdeckelemente 21, wobei Lagerelemente 20.1 der ersten Abdeckelemente 20 und Lagerelemente 21.1 der zweiten Abdeckelemente 21 dargestellt sind. Dabei ist deutlich erkennbar, dass der Mitnehmer 40 auf einer Seite mittig mit den ersten Abdeckelementen 20 (über Aufnahmeelemente 20.3) und auf einer gegenüberliegenden Seite mittig mit den Abdeckelementen 21 (über Aufnahmeelemente 21.3) verbunden ist. Eine Bewegung des Mitnehmers 40, insbesondere entlang einer (teilweisen) Kreisbahn (z. B. in einer Ebene parallel zur Fahrtrichtung), wird somit sowohl an die ersten Abdeckelemente 20 als auch an die zweiten Abdeckelemente 21 durch den Mitnehmer 40 übertragen. Gleichzeitig sind die ersten Abdeckelemente 21 untereinander über den Mitnehmer 40 und zweite Abdeckelemente 22 ebenfalls untereinander über den Mitnehmer 40 verbunden. Da die Abdeckelemente 20, 21, insbesondere die Abdeckmittel 20.2, 21.2, über Lagerelemente 20.1, 21.1 im Träger 50 drehbar gelagert sind, wird die Bewegung des Mitnehmers 40 entlang der Kreisbahn in eine Drehbewegung der Abdeckelemente 20, 21 (bzw. jeder einzelnen Abdeckmittel 20.2, 21.2) im Träger 50 umgesetzt. Ein einzelnes Abdeckelement 20, 21 umfasst somit ein Abdeckmittel 20.2, 21.2 und zumindest zwei Lagerelemente 20.1, 21.1 auf jeweils gegenüberliegenden Seiten. Bspw. umfasst das einzelne erste Abdeckelement 20 ein erstes bzw. äußeres Lagerelement 20.1a und ein zweites, inneres Lagerelement 20.1b auf der gegenüberliegenden Seite des Abdeckmittels 20.2 des Abdeckelements 20. Die Lagerelemente 20.1, 21.1 umfassen z. B. die äußeren Lagerelemente 20.1a, 21.1a, mittige Lagerelemente 20.1c, 21.1c und die inneren Lagerelemente 20.1b, 21.1b. Die inneren Lagerelemente 20.1b, 21.1b dienen dabei der Verbindung und Lagerung an einer inneren Lageraufnahme 50.1b des Trägers 50. Für die Verbindung und/oder Führung der Abdeckelemente 20, 21 am Mitnehmer 40 sind ferner Aufnahmeelemente 20.3 vorgesehen, wobei Fixierelemente 40.3 des Mitnehmers 40 z. B. als Pilzköpfe ausgebildet sind und derart angeordnet sind, dass eine laterale Bewegung (d. h. nach außen) der Abdeckelemente 20, 21 weg vom Mitnehmer 40 verhindert wird. Ferner ist hinter dem Mitnehmer 40 ein Antrieb 30 angeordnet, welcher eine mechanische (Dreh-)Bewegung erzeugt, wodurch der Mitnehmer 40 mitbewegt wird und die Abdeckelemente 20, 21 für eine Bewegung zwischen der Offenstellung I und Schließstellung II angetrieben werden. Der Mitnehmer 40 weist Kühlöffnungen 40.5 auf, um eine Kühlung des Antriebs 30 zu ermöglichen.

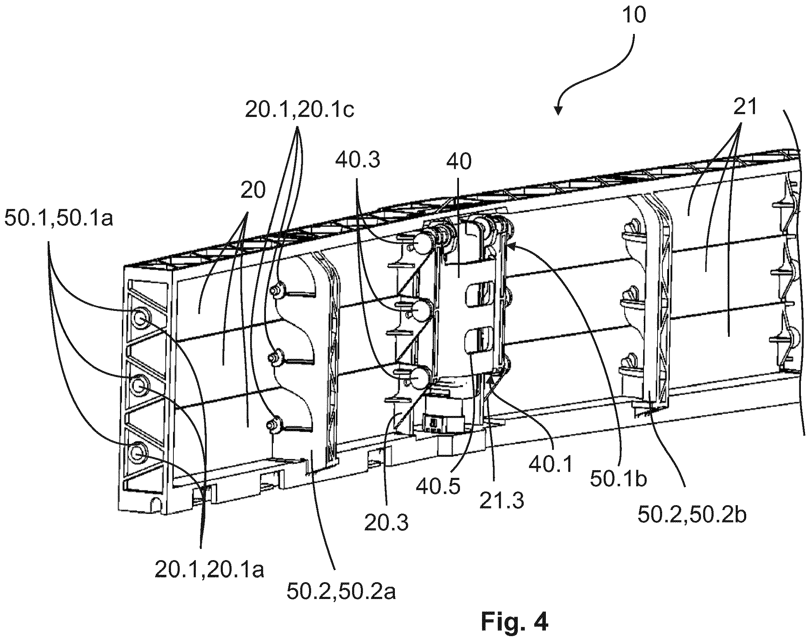

Figur 4 zeigt eine vergrößerte Darstellung der erfindungsgemäßen Vorrichtung 10 in einer Rückansicht. Die Abdeckelemente 20, 21, insbesondere die Abdeckmittel 20.2, 21.2 sind im Träger 50 drehbar gelagert. Wie bereits beschrieben, weisen hierzu die Abdeckelemente 20, 21 mit den Abdeckmitteln 20.2, 21.2 verbundene Lagerelemente 20.1, 21.1 auf. Die Lagerelemente 20.1, 21.1 können z. B. als Lagerzapfen ausgestaltet sein und korrespondieren zu entsprechenden Lageraufnahmen 50.1 des Trägers 50. Wie in Figur 4 zu sehen ist, kann dabei ein äußeres Lagerelement 20.1a in einer äußeren Lageraufnahme 50.1a des Trägers 50 drehbar gelagert und/oder formschlüssig verbunden sein. Entsprechendes gilt für äußere Lagerelemente 21.1a der zweiten Abdeckelemente 21 bzw. Abdeckmittel 21.2 und äußeren Lageraufnahmen 50.1a des Trägers 50 auf der gegenüberliegenden Seite des Trägers 50. Weiter sind in Figur 4 mittige Lagerelemente 20.1c, 21.1c der Abdeckelemente 20, 21 gezeigt, welche mit den Abdeckmitteln 20.2, 21.2 verbunden sind und bspw. als Aufnahmeelement zur Lagerung eines Lagerzapfens von Stützelementen 50.2 ausgebildet sind. Dabei kann ein erstes Stützelement 50.2a und ein zweites Stützelement 50.2b zur Stützung für jeweils erste Abdeckelemente 20 und zweite Abdeckelemente 21 vorgesehen und jeweils durch mittige Lagerelemente 20.1c, 21.1c der Abdeckelemente 20, 21 gelagert sein. Die Stützelemente 50.2 ermöglichen dabei eine verbesserte Lagerung der Abdeckelemente 20, 21 im Träger 50 und verhindern zudem eine Verbiegung der Abdeckelemente 20, 21 und/oder Abdeckmittel 20.2, 21.2 bei hohem Anpressdruck durch den Lufteintritt durch die Öffnung 1. Ferner sind in Figur 4 Aufnahmeelemente 20.3, 21.3 der Abdeckelemente 20, 21 zu sehen, welche eine kraft- und/oder formschlüssige Aufnahme und/oder drehbare Lagerung an ersten bzw. äußeren Befestigungselementen 40.1 des Mitnehmers 40 ermöglichen. Fixierelemente 40.3 des Mitnehmers 40 sind dabei derart angeordnet, dass eine laterale Bewegung (d. h. nach außen) der Abdeckelemente 20, 21 bzw. Abdeckmittel 20.2, 21.2 weg vom Mitnehmer 40 verhindert wird.

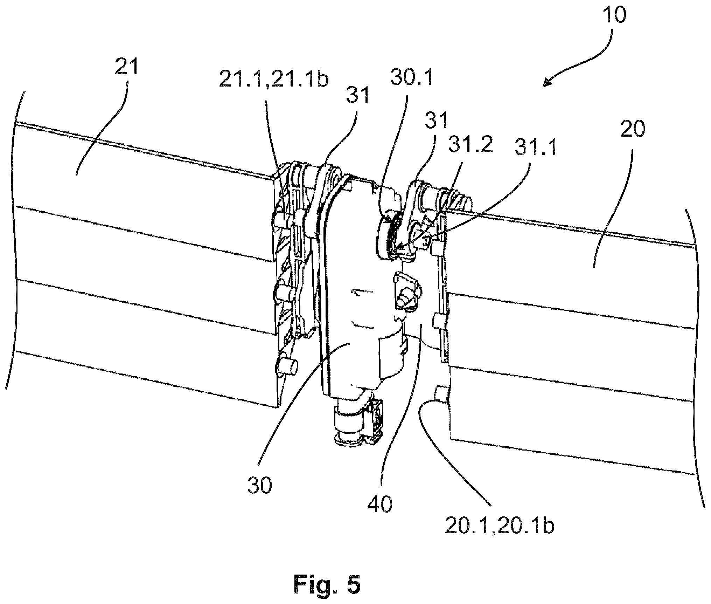

Figur 5 zeigt eine vergrößerte Ansicht von Teilen der erfindungsgemäßen Vorrichtung 10, insbesondere eines Antriebs 30, eines Mitnehmers 40 und eines Verbindungselementes 31. Der Antrieb 30 weist eine Antriebsaufnahme 30.1 auf, in welche eine Antriebswelle 31.2 des Verbindungselementes 31 eingebracht ist. Die Antriebswelle 31.2 ist z. B. drehfest, kraft- und/oder formschlüssig mit der Antriebsaufnahme 30.1 verbunden bzw. in der Antriebsaufnahme 30.1 angeordnet. Der Antrieb 30 kann bspw. selbsthemmend ausgebildet sein, sodass eine Bewegung bzw. Drehbewegung des Verbindungselementes 31 ausschließlich durch den Antrieb 30 bewirkt werden kann. Der Mitnehmer 40 ist wiederum durch ein Befestigungselement, insbesondere ein zweites Befestigungselement 40.2 mit dem Verbindungselement 31 und damit indirekt mit dem Antrieb 30 verbunden. Die Bewegung des Verbindungselementes 31 durch den Antrieb 30 führt den Mitnehmer 40 in eine Bewegung insbesondere in eine Kreisbahn. Da der Mitnehmer 40 über Befestigungselemente, insbesondere erste bzw. äußere Befestigungselemente 40.1 mit den Abdeckelementen 20, 21 verbunden ist, wird die Bewegung des Antriebs 30 an die Abdeckelemente 20, 21 übertragen. Die Abdeckelemente 20, 21 sind über Lagerelemente 20.1, 21.1 im Träger 50 drehbar gelagert, sodass ein Betrieb des Antriebs 30 eine Drehung der Abdeckelemente 20, 21 im Träger 50 bewirkt und somit ein Verkippen der Abdeckmittel 20.2, 21.2 erfolgt, wodurch eine Öffnung 1 freigegeben wird. Dabei werden in Figur 5 insbesondere die inneren Lagerelemente 20.1b, 21.1b der Abdeckelemente 20, 21 und die Lagermittel 31.1 des Verbindungselementes 31 gezeigt. Durch die Lagerelemente 20.1b, 21.1b erfolgt die Lagerung der Abdeckelemente 20, 21 im Träger 50 bzw. in einem nicht dargestellten Mittelsteg 51. Die Lagermittel 31.1 sind ebenfalls im Träger 50 bzw. im Mittelsteg 51 drehbar gelagert.

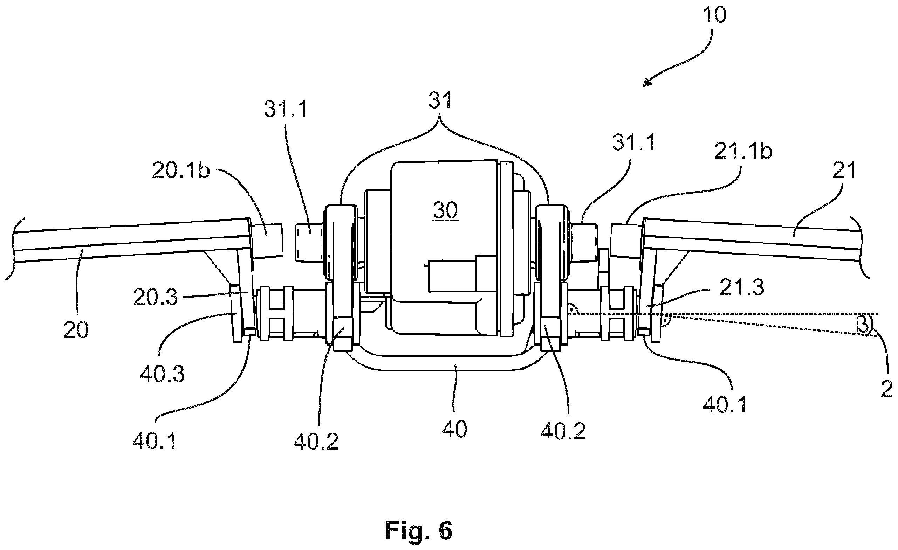

In Figur 6 ist eine Draufsicht auf Teile einer erfindungsgemäßen Vorrichtung 10 gezeigt. Dabei ist ein Antrieb 30 dargestellt, wobei ein Verbindungselement 31 durch den Antrieb 30 betrieben wird. In dem gezeigten Ausführungsbeispiel in Figur 6 entspricht dabei die Ausrichtung des Antriebs 30 der Achse eines Lagermittels 31.1 des Verbindungselements 31. Weiter ist erkennbar, dass ein erstes Abdeckelement 20 in einem Winkel β zur Ausrichtung des Antriebs 30 bzw. der Achse des Lagermittel 31.1 ausgerichtet ist. Gleiches gilt für ein zweites Abdeckelement 21. Damit eine effiziente Übertragung der Bewegung des Antriebs 30 an die Abdeckelemente 20, 21 möglich ist, wird die Bewegung über einen Mitnehmer 40 angewinkelt über einen Winkelversatz 2 übertragen. Der Winkelversatz 2 entspricht dabei im Wesentlichen dem Winkel β. Hierzu weist der Mitnehmer 40 ein Befestigungselement, insbesondere ein zweites bzw. inneres Befestigungselement 40.2 auf, das mit dem Verbindungselement 31 verbunden ist bzw. in dem Verbindungselement 31 drehbar gelagert ist. Das zweite (bzw. innere) Befestigungselement 40.2 ist dabei im Wesentlichen parallel zur Ausrichtung des Antriebs 30 bzw. einer Antriebsaufnahme 30.1 bzw. des Lagermittels 31.1 ausgerichtet. Weiter weist der Mitnehmer 40 ein weiteres Befestigungselement, insbesondere ein erstes bzw. äußeres Befestigungselement 40.1 auf, das mit den Abdeckelementen 20, 21 verbunden bzw. in den Abdeckelementen 20, 21 (d. h. in zumindest einem Aufnahmeelement 20.3, 21.3 der Abdeckelemente 20, 21) drehbar gelagert ist. Das erste (bzw. äußere) Befestigungselement 40.1 ist dabei starr ausgebildet und/oder drehfest mit dem zweiten bzw. inneren Befestigungselement 40.2 verbunden, sodass eine Bewegung des Mitnehmers 40 gleichermaßen das zweite (innere) Befestigungselement 40.2 als auch das erste (äußere) Befestigungselement 40.1 betrifft. Das zweite Befestigungselement 40.2 weist dabei eine Ausrichtung auf, die der Ausrichtung der Abdeckelemente 20, 21 angepasst ist und entspricht im Wesentlichen dem Winkelversatz 2.

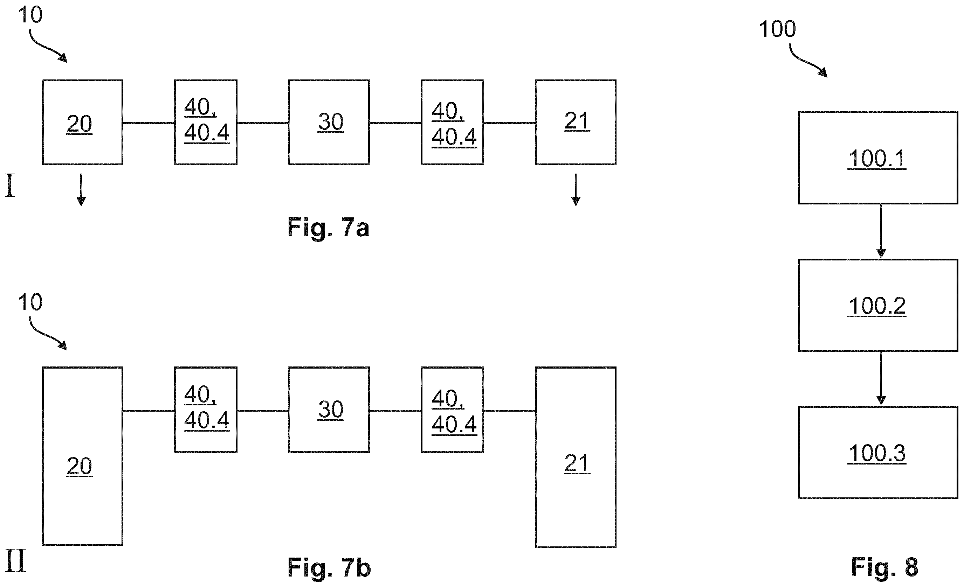

Figur 7a und Figur 7b zeigen eine schematische Rückansicht einer erfindungsgemäßen Vorrichtung 10, wobei in Figur 7a eine Offenstellung I und Figur 7b eine Schließstellung II dargestellt ist. Es ist zu sehen, dass ein Antrieb 30 mittig zwischen einem ersten Abdeckelement 20 und einem zweiten Abdeckelement 21 angeordnet ist. Die Abdeckelemente 20, 21 können dabei z. B. als Rollo ausgebildet sein. In einer Offenstellung I sind daher die Abdeckelemente 20, 21 aufgewickelt und werden durch eine Entwicklung in eine Schließstellung II gebracht. Dies wird durch die Bewegung eines Antriebs 30 erreicht, welcher z. B. eine Drehbewegung über einen Mitnehmer 40 an eine Welle (zum Aufwickeln der Rollos) der Abdeckelemente 20, 21 überträgt. Eine Drehung in eine erste Richtung bewirkt damit eine Aufwicklung und eine Drehung in eine zweite Richtung eine Entwicklung der Abdeckmittel 20.2, 21.2, die z. B. ein elastisches Material und oder ein Textil aufweisen.

Um eine zuverlässige Übertragung, insbesondere einer angewinkelten Übertragung mit einem Winkelversatz 2, zu ermöglichen, ist dabei der Mitnehmer 40 als Gelenk 40.4, insbesondere als Kardangelenk ausgebildet.

In Figur 8 ist schematisch ein erfindungsgemäßes Verfahren 100 dargestellt, wobei in einem ersten Verfahrensschritt 100.1 sich die Abdeckelemente 20, 21 in einer Offenstellung I befinden. Anschließend wird im zweiten Verfahrensschritt 100.2 eine Bewegung eines Antriebs 30 über einen Mitnehmer 40 angewinkelt an die Abdeckelemente 20, 21 übertragen. Nach einer Bewegung des Mitnehmers 40 entlang einer Kreisbahn befinden sich die Abdeckelemente 20, 21 im dritten Verfahrensschritt 100.3 in einer Schließstellung II, wobei hier der Lufteintritt durch eine Öffnung 1 zumindest teilweise verhindert ist.

### Bezuaszeichenliste

- 1: Öffnung
- 2: Winkelversatz
- 3: Normale zur Fahrtrichtung

- 10: Vorrichtung, Kühlluftregulationsvorrichtung

- 20: Abdeckelement, Erste Abdeckelemente
- 20.1: Lagerelement, Lagerzapfen
- 20.1a: äußeres Lagerelement
- 20.1b: inneres Lagerelement
- 20.1c: mittiges Lagerelement,
- 20.2: Abdeckmittel, Klappen, Lamellen
- 20.3: Aufnahmeelement für 40.1

- 21: Abdeckelement, Zweite Abdeckelemente
- 21.1: Lagerelement, Lagerzapfen
- 21.1a: äußeres Lagerelement
- 21.1b: inneres Lagerelement
- 21.1c: mittiges Lagerelement
- 21.2: Abdeckmittel, Klappen, Lamellen
- 21.3: Aufnahmeelement für 40.1

- 30: Antrieb
- 30.1: Antriebsaufnahme

- 31: Verbindungselement, Kurbel
- 31.1: Lagermittel
- 31.2: Antriebswelle
- 40: Mitnehmer
- 40.1: erstes Befestigungselement, Befestigungszapfen
- 40.2: zweites Befestigungselement, Befestigungszapfen
- 40.3: Fixierelement für 40.1, Pilzkopf
- 40.4: Gelenk
- 40.5: Kühlöffnungen für 30

- 50: Träger
- 50.1: Lageraufnahme
- 50.1a: äußere Lageraufnahme
- 50.1b: innere Lageraufnahme
- 50.2: Stützelement
- 50.2a: erstes Stützelement
- 50.2b: zweites Stützelement
- 51: Mittelsteg
- 51.1: Kühlöffnungen für 30

- 100: Verfahren
- 100.1: Erster Verfahrensschritt
- 100.2: Zweiter Verfahrensschritt
- 100.3: Dritter Verfahrensschritt

- I: Offenstellung
- II: Schließstellung

- α: Winkel
- β: Winkel

## Patentansprüche

1. Vorrichtung (10) zum Regulieren einer Luftströmung zu einer Kühlervorrichtung eines Fahrzeuges, wobei die Luftströmung durch zumindest eine Öffnung (1) auf die Kühlervorrichtung leitbar ist, mit
zumindest zwei Abdeckelementen (20, 21) zum zumindest teilweisen Verschließen der Öffnung (1) in zumindest einer Schließstellung (II), und
einem Antrieb (30) zum Bewegen der Abdeckelemente (20, 21) zwischen der Schließstellung (II) und einer Offenstellung (I) zur zumindest teilweisen Freigabe der Öffnung (1),
wobei ein Mitnehmer (40) zur Übertragung einer Bewegung des Antriebs (30) an die Abdeckelemente (20, 21) vorgesehen ist, und wobei die Abdeckelemente (20, 21) zueinander angewinkelt angeordnet sind,
wobei die Übertragung der Bewegung durch den Mitnehmer (40) angewinkelt erfolgt, wobei die Abdeckelemente (20, 21) über einen Winkel α angewinkelt zueinander angeordnet sind, und
wobei die Übertragung der Bewegung durch den Mitnehmer (40) dem Winkel α zwischen den Abdeckelementen (20, 21) folgt,
und wobei zwei Verbindungselemente (31), nämlich zwei Kurbeln, zur direkten Verbindung und/oder Übertragung der Bewegung des Antriebs (30), mit dem Mitnehmer (40) verbunden sind, und
wobei diese zwei Verbindungselemente (31) jeweils rotationsfest mit einer Antriebswelle und/oder Antriebsaufnahme des Antriebs (30) verbunden sind, sodass bei einem Betrieb des Antriebs (30) eine Rotationsbewegung der Verbindungselemente (31) erfolgt.

2. Vorrichtung (10) nach Anspruch 1,
**dadurch gekennzeichnet,**
**dass** der Mitnehmer (40) derart ausgebildet ist, dass die Bewegung, insbesondere eine Drehbewegung des Antriebs (30), durch den Mitnehmer (40) mit einem Winkelversatz (2) an die zumindest zwei Abdeckelemente (20, 21) übertragen wird.

3. Vorrichtung (10) nach einem der vorhergehenden Ansprüche,
**dadurch gekennzeichnet,**
**dass** der Mitnehmer (40) zumindest ein erstes Befestigungselement (40.1), insbesondere einen Befestigungszapfen, zur Verbindung mit den Abdeckelementen (20, 21) und insbesondere zumindest ein zweites Befestigungselement (40.2), insbesondere einen Befestigungszapfen, zur Verbindung mit dem Antrieb (30) aufweist.

4. Vorrichtung (10) nach einem der vorhergehenden Ansprüche,
**dadurch gekennzeichnet,**
**dass** der Mitnehmer (40) als Gelenk (40.4), insbesondere als Kardangelenk, ausgestaltet ist.

5. Vorrichtung (10) nach einem der vorhergehenden Ansprüche,
**dadurch gekennzeichnet,**
**dass** der Kraftfluss zur Übertragung der Bewegung zum Bewegen der Abdeckelemente (20, 21) zwischen der Schließstellung (II) und der Offenstellung (I) von dem Antrieb (30), insbesondere ausschließlich über den Mitnehmer (40) an die Abdeckelemente (20, 21) erfolgt.

6. Vorrichtung (10) nach einem der vorhergehenden Ansprüche,
**dadurch gekennzeichnet,**
**dass** zumindest ein im Kraftfluss liegendes Bauteil, insbesondere der Mitnehmer (40) und/oder das erste Befestigungselement (40.1) und/oder das zweite Befestigungselement (40.2) des Mitnehmers (40), eine ballige und/oder bombierte und/oder abgewinkelte Oberfläche aufweist, die insbesondere derart ausgestaltet ist, dass Toleranzen bei einer Rotationsbewegung, insbesondere der Abdeckelemente (20, 21), der Befestigungselemente und/oder des Mitnehmers (40) ausgeglichen werden.

7. Vorrichtung (10) nach einem der vorhergehenden Ansprüche,
**dadurch gekennzeichnet,**
**dass** die Abdeckelemente (20, 21) beweglich in einem Träger (50) gelagert sind, wobei insbesondere zumindest zwei Lagerelemente (20.1, 21.1) der Abdeckelemente (20, 21) in jeweils einer Lageraufnahme (50.1) des Trägers (50) drehbar gelagert sind.

8. Vorrichtung (10) nach einem der vorhergehenden Ansprüche,
**dadurch gekennzeichnet,**
**dass** zumindest ein mittiges Lagerelement (20.1c, 21.1c) der Abdeckelemente (20, 21) mittig an zumindest ein Abdeckmittel (20.2, 21.2) der Abdeckelemente (20, 21) angeordnet ist, und insbesondere als Aufnahmeelement für ein Stützelement (50.2) des Trägers (50) ausgebildet ist.

9. Vorrichtung (10) nach einem der vorhergehenden Ansprüche,
**dadurch gekennzeichnet,**
**dass** der Träger (50) und/oder die Abdeckelemente (20, 21) und/oder der Mitnehmer (40) einstückig, insbesondere monolithisch, ausgebildet sind, insbesondere aus einem Spritzgussteil.

10. Vorrichtung (10) nach einem der vorhergehenden Ansprüche,
**dadurch gekennzeichnet,**
**dass** jeder der zwei Kurbeln, zur direkten Verbindung und/oder Übertragung der Bewegung einer Antriebswelle und/oder Antriebsaufnahme (30.1), mit einem zweiten Befestigungselement (40.2) verbunden ist.

11. Vorrichtung (10) nach einem der vorhergehenden Ansprüche,
**dadurch gekennzeichnet,**
**dass** der Mitnehmer (40) über zumindest ein erstes Befestigungselement (40.1) direkt mit den Abdeckelementen (20, 21), insbesondere kraft- und/oder formschlüssig mit einem Aufnahmeelement (20.3, 21.3) der Abdeckelemente (20, 21), verbunden ist, insbesondere derart, dass bei einer Bewegung des Mitnehmers (40) eine Rotation der Abdeckelemente (20, 21) zwischen der Offenstellung (I) und der Schließstellung (II) erfolgt.

12. Vorrichtung (10) nach einem der vorhergehenden Ansprüche,
**dadurch gekennzeichnet,**
**dass** zumindest ein Fixierelement (40.3) des Mitnehmers (40) derart am ersten Befestigungselement (40.1) angeordnet ist, dass eine seitliche Bewegung der Abdeckelemente (20, 21) blockiert ist.

13. Verfahren (100) zum Betrieb einer Vorrichtung (10) zum Regulieren einer Luftströmung zu einer Kühlervorrichtung eines Fahrzeuges, wobei
die Luftströmung durch zumindest eine Öffnung (1) auf die Kühlervorrichtung geleitet wird, mit
zumindest zwei Abdeckelementen (20, 21), wobei
die Abdeckelemente (20, 21) in zumindest einer Schließstellung (II) die Öffnung (1) zumindest teilweise verschließen, und
in einer Offenstellung (I) die Öffnung (1) zumindest teilweise freigeben, wobei
die Bewegung der Abdeckelemente (20, 21) zwischen der Schließstellung (II) und der Offenstellung (I) durch einen Antrieb (30) erfolgt, wobei
die Abdeckelemente (20, 21) angewinkelt angeordnet sind und die Bewegung des Antriebs (30) an die Abdeckelemente (20, 21) über einen Mitnehmer (40) übertragen wird, wobei eine Vorrichtung (10) nach einem der Ansprüche 1 bis 12 zum Einsatz kommt.

## Claims

1. Device (10) for regulating an air flow to a cooling device of a vehicle, wherein the air flow can be directed to the cooling device through at least one opening (1), comprising
at least two cover elements (20, 21) for at least partially closing the opening (1) in at least one closed position (II), and
a drive (30) for moving the cover elements (20, 21) between the closed position (II) and an open position (I) for at least partial release of the opening (1),
wherein a driver (40) is provided for transmitting a movement of the drive (30) to the cover elements (20, 21), and wherein the cover elements (20, 21) are arranged at an angle to one another,
wherein the transmission of the movement by the driver (40) is angled, wherein the cover elements (20, 21) are angled with respect to each other over an angle α, and
wherein the transmission of the movement by the driver (40) follows the angle α between the cover elements (20, 21),
and wherein two connecting elements (31), namely two cranks, for directly connecting and/or transmitting the movement of the drive (30), are connected to the driver (40), and wherein these two connecting elements (31) are each rotationally fixedly connected to a drive shaft and/or drive receptacle of the drive (30), so that a rotational movement of the connecting elements (31) takes place during operation of the drive (30).

2. Device (10) according to claim 1,
**characterized in that**
the driver (40) is designed in such a way that the movement, in particular a rotary movement of the drive (30), is transmitted by the driver (40) with an angular offset (2) to the at least two cover elements (20, 21).

3. Device (10) according to any one of the preceding claims,
**characterized in that**
the driver (40) has at least one first fastening element (40.1), in particular a fastening pin, for connection to the cover elements (20, 21), and in particular at least one second fastening element (40.2), in particular a fastening pin, for connection to the drive (30).

4. Device (10) according to any one of the preceding claims,
**characterized in that**
the driver (40) is designed as a joint (40.4), in particular as a cardan joint.

5. Device (10) according to any one of the preceding claims,
**characterized in that**
the power flow for transmitting the movement for moving the cover elements (20, 21) between the closed position (II) and the open position (I) is effected by the drive (30), in particular exclusively via the driver (40) to the cover elements (20, 21).

6. Device (10) according to any one of the preceding claims,
**characterized in that**
at least one component lying in the force flow, in particular the driver (40) and/or the first fastening element (40.1) and/or the second fastening element (40.2) of the driver (40), has a crowned and/or cambered and/or angled surface, which is designed in particular in such a way that tolerances in a rotational movement, in particular of the cover elements (20, 21), of the fastening elements and/or of the driver (40) are compensated.

7. Device (10) according to any one of the preceding claims,
**characterized in that**
the cover elements (20, 21) are movably mounted in a carrier (50), wherein in particular at least two bearing elements (20.1, 21.1) of the cover elements (20, 21) are rotatably mounted in a respective bearing seat (50.1) of the carrier (50).

8. Device (10) according to any one of the preceding claims,
**characterized in that**
at least one central bearing element (20.1c, 21.1c) of the cover elements (20, 21) is arranged centrally on at least one cover means (20.2, 21.2) of the cover elements (20, 21), and in particular is formed as a receiving element for a support element (50.2) of the carrier (50).

9. Device (10) according to any one of the preceding claims,
**characterized in that**
the carrier (50) and/or the cover elements (20, 21) and/or the driver (40) are formed in one piece, in particular monolithically, in particular from an injection-molded part.

10. Device (10) according to any one of the preceding claims,
**characterized in that**
each of the two cranks, for direct connection and/or transmission of the movement of a drive shaft and/or drive receptacle (30.1), is connected to a second fastening element (40.2).

11. Device (10) according to any one of the preceding claims,
**characterized in that**
the driver (40) is connected directly to the cover elements (20, 21) via at least a first fastening element (40.1), in particular in a force-fitting and/or form-fitting manner to a receiving element (20.3, 21.3) of the cover elements (20, 21), in particular in such a way that, during a movement of the driver (40), a rotation of the cover elements (20, 21) between the open position (I) and the closed position (II) takes place.

12. Device (10) according to any one of the preceding claims,
**characterized in that**
at least one fixing element (40.3) of the driver (40) is arranged on the first fastening element (40.1) in such a way that a lateral movement of the cover elements (20, 21) is blocked.

13. A method (100) of operating a device (10) for regulating an air flow to a cooling device of a vehicle, wherein
the air flow is directed through at least one opening (1) onto the cooling device, comprising
at least two cover elements (20, 21), wherein
the cover elements (20, 21) at least partially closing the opening (1) in at least one closed position (II), and
in an open position (I) at least partially uncover the opening (1), wherein
the movement of the cover elements (20, 21) between the closed position (II) and the open position (I) is effected by a drive (30), wherein
the cover elements (20, 21) are arranged at an angle and the movement of the drive (30) is transmitted to the cover elements (20, 21) via a driver (40), wherein a device (10) according to one of the claims 1 to 12 is used.

## Revendications

1. Dispositif (10) pour réguler un flux d'air vers un dispositif de refroidissement d'un véhicule, le flux d'air pouvant être dirigé vers le dispositif de refroidissement à travers au moins une ouverture (1), avec
au moins deux éléments de recouvrement (20, 21) pour fermer au moins partiellement l'ouverture (1) dans au moins une position de fermeture (II), et
un entraînement (30) pour déplacer les éléments de recouvrement (20, 21) entre la position de fermeture (II) et une position d'ouverture (I) pour libérer au moins partiellement l'ouverture (1),
un entraîneur (40) étant prévu pour transmettre un mouvement de l'entraînement (30) aux éléments de recouvrement (20, 21), et les éléments de recouvrement (20, 21) étant disposés de manière inclinée les uns par rapport aux autres,
la transmission du mouvement par l'entraîneur (40) s'effectuant de manière inclinée, les éléments de recouvrement (20, 21) étant disposés de manière inclinée les uns par rapport aux autres sur un angle α, et
la transmission du mouvement par l'entraîneur (40) suivant l'angle α entre les éléments de recouvrement (20, 21),
et dans lequel deux éléments de liaison (31), à savoir deux manivelles, sont reliés à l'entraîneur (40) pour la liaison directe et/ou la transmission du mouvement de l'entraînement (30), et
ces deux éléments de liaison (31) étant respectivement reliés de manière solidaire en rotation à un arbre d'entraînement et/ou à un logement d'entraînement de l'entraînement (30), de sorte que lors d'un fonctionnement de l'entraînement (30), il se produit un mouvement de rotation des éléments de liaison (31).

2. Dispositif (10) selon la revendication 1,
**caractérisé en ce que**
l'entraîneur (40) est réalisé de telle sorte que le mouvement, en particulier un mouvement de rotation de l'entraînement (30), est transmis par l'entraîneur (40) avec un décalage angulaire (2) aux au moins deux éléments de recouvrement (20, 21).

3. Dispositif (10) selon l'une des revendications précédentes,
**caractérisé en ce que**
l'entraîneur (40) présente au moins un premier élément de fixation (40.1), en particulier un tenon de fixation, pour la liaison avec les éléments de recouvrement (20, 21) et en particulier au moins un deuxième élément de fixation (40.2), en particulier un tenon de fixation, pour la liaison avec l'entraînement (30).

4. Dispositif (10) selon l'une des revendications précédentes,
**caractérisé en ce que**
l'entraîneur (40) est conçu comme une articulation (40.4), en particulier comme un joint de cardan.

5. Dispositif (10) selon l'une des revendications précédentes,
**caractérisé en ce que**
le flux de force pour la transmission du mouvement pour le déplacement des éléments de recouvrement (20, 21) entre la position de fermeture (II) et la position d'ouverture (I) est effectué par l'entraînement (30), en particulier exclusivement par l'intermédiaire de l'entraîneur (40) aux éléments de recouvrement (20, 21).

6. Dispositif (10) selon l'une des revendications précédentes,
**caractérisé en ce qu'**
au moins un composant situé dans le flux de force, en particulier l'entraîneur (40) et/ou le premier élément de fixation (40.1) et/ou le deuxième élément de fixation (40.2) de l'entraîneur (40), présente une surface bombée et/ou bombée et/ou coudée, qui est en particulier conçue de telle sorte que les tolérances lors d'un mouvement de rotation, en particulier des éléments de recouvrement (20, 21), des éléments de fixation et/ou de l'entraîneur (40), sont compensées.

7. Dispositif (10) selon l'une des revendications précédentes,
**caractérisé en ce que**
les éléments de recouvrement (20, 21) sont montés mobiles dans un support (50), au moins deux éléments de palier (20.1, 21.1) des éléments de recouvrement (20, 21) étant notamment montés rotatifs dans un logement de palier (50.1) respectif du support (50).

8. Dispositif (10) selon l'une des revendications précédentes,
**caractérisé en ce qu'**
au moins un élément de palier central (20.1c, 21.1c) des éléments de recouvrement (20, 21) est disposé au centre d'au moins un moyen de recouvrement (20.2, 21.2) des éléments de recouvrement (20, 21), et est conçu en particulier comme élément de réception pour un élément de support (50.2) du support (50).

9. Dispositif (10) selon l'une des revendications précédentes,
**caractérisé en ce que**
le support (50) et/ou les éléments de recouvrement (20, 21) et/ou l'entraîneur (40) sont réalisés d'une seule pièce, en particulier de manière monolithique, notamment à partir d'une pièce moulée par injection.

10. Dispositif (10) selon l'une des revendications précédentes,
**caractérisé en ce que**
chacune des deux manivelles, pour la liaison directe et/ou la transmission du mouvement d'un arbre d'entraînement et/ou d'un logement d'entraînement (30.1), est reliée à un deuxième élément de fixation (40.2).

11. Dispositif (10) selon l'une des revendications précédentes,
**caractérisé en ce que**
l'entraîneur (40) est relié directement aux éléments de recouvrement (20, 21) par l'intermédiaire d'au moins un premier élément de fixation (40.1), en particulier par adhérence et/ou par complémentarité de forme avec un élément de réception (20.3, 21.3) des éléments de recouvrement (20, 21), en particulier de telle sorte que, lors d'un mouvement de l'entraîneur (40), il se produit une rotation des éléments de recouvrement (20, 21) entre la position d'ouverture (I) et la position de fermeture (II).

12. Dispositif (10) selon l'une des revendications précédentes,
**caractérisé en ce qu'**
au moins un élément de fixation (40.3) de l'entraîneur (40) est disposé sur le premier élément de fixation (40.1) de telle sorte qu'un mouvement latéral des éléments de recouvrement (20, 21) est bloqué.

13. Procédé (100) de fonctionnement d'un dispositif (10) pour réguler un flux d'air vers un dispositif de refroidissement d'un véhicule, dans lequel
le flux d'air est dirigé vers le dispositif de refroidissement à travers au moins une ouverture (1), avec
au moins deux éléments de couverture (20, 21), dans lesquels
les éléments de couverture (20, 21) ferment au moins partiellement l'ouverture (1) dans au moins une position de fermeture (II), et
dans une position d'ouverture (I), ils libèrent au moins partiellement l'ouverture (1), où le mouvement des éléments de recouvrement (20, 21) entre la position de fermeture (II) et la position d'ouverture (I) est effectué par un entraînement (30), où les éléments de recouvrement (20, 21) sont disposés de manière inclinée et le mouvement de l'entraînement (30) est transmis aux éléments de recouvrement (20, 21) par l'intermédiaire d'un entraîneur (40), un dispositif (10) selon l'une des revendications 1 à 12 étant mis en oeuvre.
